# EUROPÄISCHE PATENTSCHRIFT

(11) **EP 0 934 851 B1**
(45) Veröffentlichungstag und Bekanntmachung des Hinweises auf die Patenterteilung: **19.05.2004**
(21) Anmeldenummer: 99102188.2
(22) Anmeldetag: 04.02.1999
(51) Int. Cl.: B60R 16/02, B60R 11/04, B60S 1/08, B60Q 1/08

(54) **Optische Sensorvorrichtung für Kraftfahrzeuge**
Optical sensor for a motor vehicle
Capteur optique pour véhicule à moteur

(30) Priorität: 07.02.1998 DE 19805000
(43) Veröffentlichungstag der Anmeldung: 11.08.1999
(73) Patentinhaber: ADAM OPEL AG, 65423 Rüsselsheim (DE)
(72) Erfinder: Zerbe, Bernd, Dipl.-Ing., 55299 Nackenheim (DE)
(74) Vertreter: Kümpfel, Heinz, Dipl.-Ing.

(56) Entgegenhaltungen:
- DE-A- 4 121 845
- DE-A- 4 333 665
- DE-A- 19 531 107
- PATENT ABSTRACTS OF JAPAN vol. 017, no. 631 (P-1648), 22. November 1993 (1993-11-22) -& JP 05 203906 A (TOYOTA CENTRAL RES & DEV LAB INC), 13. August 1993 (1993-08-13)
- PATENT ABSTRACTS OF JAPAN vol. 014, no. 277 (M-0985), 15. Juni 1990 (1990-06-15) & JP 02 085044 A (HONDA MOTOR CO LTD), 26. März 1990 (1990-03-26)
- PATENT ABSTRACTS OF JAPAN vol. 009, no. 120 (P-358), 24. Mai 1985 (1985-05-24) & JP 60 006919 A (MITSUBISHI DENKI KK), 14. Januar 1985 (1985-01-14)

## Beschreibung

Die Erfindung bezieht sich auf eine optische Sensorvorrichtung für Kraftfahrzeuge mit einem hinter einer Scheibe des Kraftfahrzeugs anzuordnenden Sensor und den weiteren im Oberbegriff des Patentanspruchs 1 angegebenen Merkmalen.

Vorrichtungen dieser Art sind beispielsweise aus der DE-A-40 16 570, DE-A-197 04 818 oder aus der Zeitschrift ATZ/MTZ-Sonderausgabe "System Partners 97" 6/1997 bekannt.

Kameras mit optischem Sensor und Optik werden hinter Windschutz-, Heck- oder Scheinwerferscheiben angeordnet, womit sie von Umgebungseinflüssen im Bereichen des Kraftfahrzeugs abgegrenzt und optimiert, jedoch nicht in jeder Hinsicht zufriedenstellend betreibbar sind. Die Sensoren werden zur Aufnahme von Umgebungsbildern eingesetzt, oder sie dienen zur Ansteuerung von Aktoren, wie Scheinwerfer, Scheibenwischer, Scheibenwaschanlage, Scheibenheizung oder auch Nebellichter. Es ist auch bekannt, daß sensorisch erfaßte Bildinformationen zur aktiven Fahrzeugsteuerung herangezogen werden.

Die DE-A-197 04 818 beschreibt ein System, bei dem sensorisch erfaßte optische Strahlung im Hinblick auf zumindest zwei Abhängigkeiten ausgewertet wird. Dabei wird ein Empfangsarray speziell linear oder flächenhaft ausgebildet und Sensorsignale werden gepulst statisch und/oder dynamisch ausgewertet, was einen hohen Rechenaufwand erfordert. Es wird entweder ein Fernbereich (Steuerung von Licht, Abblendfunktion) oder ein Nahbereich (Steuerung von Scheibenwischer/-waschanlage/-heizung) beobachtet. Dabei erscheint nachteilig, daß Strahlung verschiedener Wellenlänge ausgesendet werden oder ein gepulster Betrieb erfolgen muß. Der Fernbereich muß nahezu im Echtzeitbetrieb beobachtet werden, wohingegen dies im Nahbereich nicht nötig ist. Bei gepulstem Betrieb wird dem nicht Rechnung getragen.

Der Sensor nach DE-A-197 04 818 soll insbesondere hinter einer Windschutzscheibe im Bereich eines Innenrückspiegels angeordnet werden. Bei diesem System ergibt sich, daß die Oberflächenbeschaffenheit der Scheibe zwar festgestellt wird, nicht aber in jedem Fall wunschgemäß beeinflußbar ist. Bei Regen oder Scheibenverschmutzung ist der Bereich der Windschutzscheibe, in dem der Innenspiegel angeordnet ist, von vielen Wischersystemen nicht erreichbar. Die Sicht des Sensors schwankt auch dann stark, wenn der Strahlen-Durchtrittsbereich der Scheibe vom Wischer erreicht wird (intervallabhängig), so daß die Qualität der Bilder des Fernbereiches negativ beeinträchtigt ist. Zur Verbesserung dieser Bildqualität ist hoher Rechenaufwand vonnöten. Eine Steuereinheit zur Auswertung der Sensorsignale muß ein extrem breites Spektrum von Sensorsignalen verarbeiten können. Ein weiterer Nachteil der bekannten Sensorvorrichtungen im Fahrzeuginnern besteht darin, daß eine relativ hohe Verschmutzungsanfälligkeit besteht, wodurch die Bildqualität negativ beeinflußt ist. Hartnäckig haftender fetthaltiger Staub kann selbst zum Systemausfall führen.

Lösungen, die in der DE-A-44 36 087 (Kamera-Heizung) oder DE-A-37 10 847 (antreibbare Folie vor einer Optik) beschrieben sind, sind nicht in Vorrichtungen nach dem Oberbegriff des Patentanspruchs 1 überführbar. Kameras nach DE-A-43 05 807 können die genannten Probleme zwar mindern, sind aber in der Anschaffung und bezüglich der erforderlichen Ansteuerelektronik zu aufwendig.

Die gattungsgemäße DE 195 31 107 A1 offenbart eine Rücklichterkennungsvorrichtung für einen automatischen Blendschutzspiegel, die eine Schicht mit variabler Lichtdurchlässigkeit und einen hinter der Schicht mit variabler Lichtdurchlässigkeit vorgesehenen reflektierenden Film aufweist, wobei das Reflektionsvermögen des reflektierenden Films durch das Regeln der Lichtdurchlässigkeit der Schicht mit variabler Lichtdurchlässigkeit variabel geregelt ist. Der reflektierende Film besteht aus einem Halbspiegel, hinter dem ein Lichtübertragungsteil angeordnet ist, das durch den Halbspiegel gelangendes Licht sammelt, das ein Fotosensor empfängt.

Aus der JP 05 203906 A ist ein Antiblendsystem bekannt, bei dem ein optischer Sensor auf einer Windschutzscheibe angeordnet ist.

Darüber hinaus beschreibt die DE 43 33 665 A1 eine Sensoreinrichtung zum Erfassen des Benetzungsgrades einer mit Niederschlag benetzbaren, transparenten Scheibe, wobei an die Scheibe in deren Benetzungsbereich auf ihrer dem Niederschlag nicht ausgesetzten Oberfläche ein Strahlenleitkörper angekoppelt ist.

Ferner ist JP 02 085044 A ein optischer Wassertropfen-Erkennungssensor zu entnehmen, der auf der Innenseite einer Windschutzscheibe installiert ist.

Im Weiteren offenbart die DE 41 21 845 A1 einen Blendschutz für ein Fahrzeug, auf dessen Windschutzscheibe am oberen Teil ihrer Innenfläche eine Tönung aufgebracht ist, die durch eine zwei Sensoren umfassende Steuerschaltung elektronisch gesteuert ist.

Schließlich ist aus der JP 60 006919 ein Sensor bekannt, der aus einem Gehäuse besteht, in das eine Linse und eine Fotodiode eingesetzt sind und das auf einer Armaturentafel hinter einer Windschutzscheibe befestigt ist.

Es ist Aufgabe der Erfindung, eine optische Sensorvorrichtung zu schaffen, die von Umwelteinflüssen abgeschirmt im Kraftfahrzeug anzuordnen ist, dabei einen möglichst geringen Aufwand verursacht und somit kostengünstig anzubieten ist und die optimierte Auswertung der sensorisch erfassten Informationen zulässt.

Zur Lösung dieser Aufgabe zeichnet sich die Vorrichtung gemäß der Erfindung durch die im Patentanspruch 1 angegebenen Merkmale aus. Weitere Einzelheiten der Erfindung ergeben sich aus den Unteransprüchen und der folgenden Beschreibung.

Eine optimierte Auswertung der auf die Optik der erfindungsgemäßen Sensorvorrichtung gerichteten Strahlung wird dadurch möglich, dass die Optik selbst im Durchtrittsbereich der auf die Optik gerichteten Strahlung mit einer Schicht variabler Lichtdurchlässigkeit versehen ist. Damit ist es möglich, die Belichtungsstärke des Sensors selbst in relativ engen Grenzen einzustellen. Eine Beschichtung eines Teils der Optik ist mit sehr geringem Aufwand durchführbar, welcher sich durch unmittelbare Einsparungen bei der Optik, dem Sensor selbst und bei der die Sensorsignale auswertenden Steuervorrichtung rentiert. Diese Vorteile kommen bereits zum Tragen, wenn die Lichtdurchlässigkeit der genannten Schicht im einfachsten Fall in zwei Stufen zur Tag-/Nachtanpassung gesteuert wird. Komfortabler ist es jedoch, diese Steuerung variabel in Abhängigkeit von der den Sensor erreichenden Lichtstärke vorzunehmen, wie dies prinzipiell bereits bekannt ist (DE-A-43 05 807). Dazu kann die die Sensorsignale auswertende Steuervorrichtung dienen, wobei selbst eine differenzierte Ansteuerung von einzelnen Flächenelementen der Beschichtung möglich ist.

Erfindungsgemäß ist die Optik der Sensorvorrichtung integraler Bestandteil der Scheibe, hinter der die Sensorvorrichtung angeordnet ist. Damit sind Kosten reduzierbar und ein Gehäuse der Sensorvorrichtung kann unmittelbar an die Scheibe angesetzt werden. So ist der Sensor und die zugehörige Elektronik zusätzlich auch in dem von der Fahrzeugumgebung abgegrenzten Raum (Innenraum, Scheinwerferraum, ...) gekapselt angeordnet und negative Einwirkungen zwischen Optik und Scheibe sind auszuschließen.

Zur Aufnahme von optischen Informationen aus dem Nah- und dem Fernbereich des Sensors sollte die Optik geteilt sein und innerhalb zweier Bereiche unterschiedlich fokussieren. Dabei ist eine horizontale Teilung von Vorteil. Ein oberer Optikbereich fokussiert zur Aufnahme des Nahfeldes und ein unterer Optikbereich fokussiert zur Fernfeldaufnahme. Bei dieser Anordnung ist erreichbar, dass möglichst viele Fernfeldinformationen aufnehmbar sind, da der Himmel kein wesentlicher Bestandteil des von der Fernfeldoptik fokussierten Lichtes ist. Von Vorteil ist, dass Aufnahmen des Nah- und des Fernfeldes gleichzeitig auswertbar sind.

Details der Erfindung ergeben sich aus der folgenden Beschreibung eines Ausführungsbeispiels. Von den zugehörigen Zeichnungen zeigt:
- Fig. 1:: eine schematische Schnittdarstellung durch den oberen Windschutzscheiben-Dach-Bereich eines Fahrzeugs mit dort angeordneter optischer Sensorvorrichtung;
- Fig. 2:: Detail X aus Fig. 1 in vergrößertem Maßstab;
- Fig. 3:: Draufsicht auf den Windschutzscheibenbereich nach Fig. 2 aus Richtung des Pfeils S.

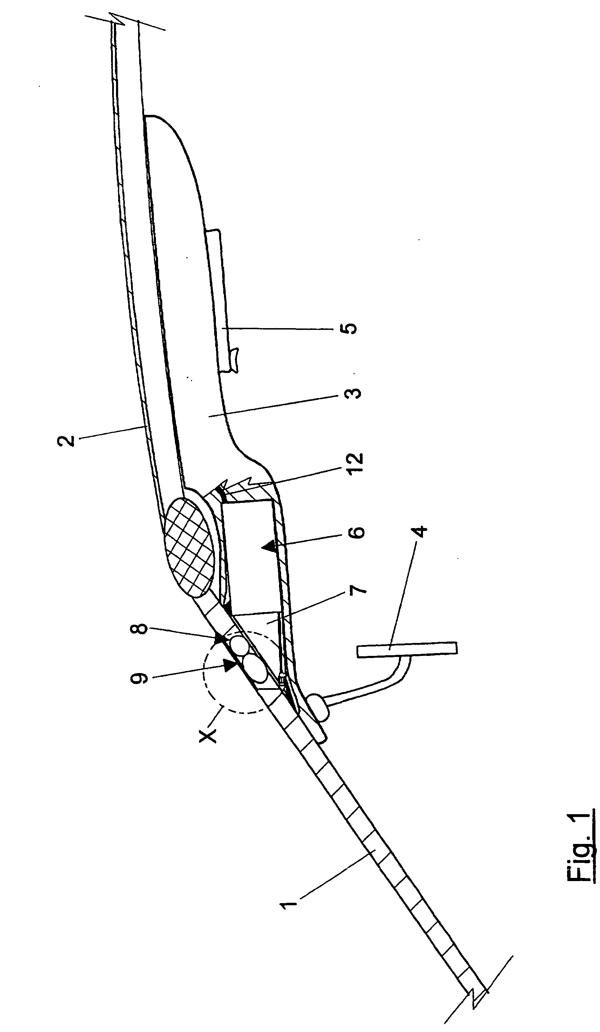

Aus Fig. 1 ist stark vereinfacht der Bereich des Übergangs einer Windschutzscheibe 1 in den Dachbereich 2 eines Kraftfahrzeugs ersichtlich. In diesem Bereich ist ein Leuchten-Sensor-Modul angeordnet, an dessen Gehäuse 3 auch ein Innenrückspiegel 4 befestigt ist. In dem genannten Modul sind eine Innenraumleuchte 5 und eine optische Sensorvorrichtung 6 angeordnet und es können weitere Elemente wie Lesespots, Lautsprecher, Mikrofone, ... untergebracht sein.

Die optische Sensorvorrichtung 6 dient zur Aufnahme von Bildinformationen aus der Umgebung des Kraftfahrzeugs, wobei die Erlangung von Informationen aus dem unmittelbaren Nahfeld der Windschutzscheibe 1 als auch dem Fernbereich vor dem Kraftfahrzeug für die Optimierung der Fahrzeugbetriebsweise von Belang sind. Die Sensorvorrichtung 6 ist, wie bekannt, vor Umwelteinflüssen geschützt hinter der Scheibe 1 im Innenraum des Kraftfahrzeugs angeordnet. Darüber hinaus ist jedoch ein Gehäuse 7 der Sensorvorrichtung 6 direkt dichtend an die Windschutzscheibe 1 angesetzt, so daß eine Sensor-Optik 8 auch vor negativen Einflüssen im Kraftfahrzeuginnenraum (Staub, etc.) geschützt ist. Zusätzlichen mechanischen Schutz bietet das Gehäuse 3 des Moduls.

Die Optik 8 als Bestandteil der nicht verdeutlichten Sensor-Optik ist in die Windschutzscheibe 1 integriert, wobei gemäß der Erfindung eine Schicht 9 variabler Lichtdurchlässigkeit auf die Optik aufgebracht ist.

Die Schicht 9 besteht aus zwei transparenten Elektroden, zwischen denen sich ein transparenter Elektrolyt und eine aktive Polymerschicht befinden. Die Lichtdurchlässigkeit der Polymerschicht ist durch Steuerung der Elektrodenladung steuerbar. Zumindest eine Steuerspannung wird der Schicht über eine Zuleitung 10 zugeführt, wobei die Steuerspannung abhängig ist von Signalen einer die Bildinformationen auswertenden Steuervorrichtung. Diese ist im Gehäuse 7 der Sensorvorrichtung 6 angeordnet, über einen Stecker 11 mit der Zuleitung 10 kontaktierbar und über ein elektrisches Kabel 12 mit weiteren Steuervorrichtungen des Kraftfahrzeugs (Licht; Scheibenwischer; aktives Fahrwerk, ...) verbunden.

Im einfachsten Fall wird die Lichtdurchlässigkeit der Schicht 9 in zwei Stufen zur Tag-/Nachtanpassung verändert, womit bereits eine deutliche Vereinfachung der Bildauswertung und damit Kosten- und Zeitreduzierungen einhergehen. Ohne deutlich höheren Aufwand ist eine bessere Qualität der Bildauswertung erreichbar, wenn die Lichtdurchlässigkeit der Schicht 9 innerhalb bestimmter Grenzen stufenlos variiert werden kann. Eine den Ansprüchen ganz besonders gerecht werdende Ausführung der Erfindung ist möglich, wenn einzelne Sektoren 9.1 bis 9.25 der Schicht 9 unterschiedlich ansteuerbar sind, die Lichtdurchlässigkeit der Schicht 9 also über die Fläche der Schicht 9 variabel einstellbar ist. So kann eine der optimalen Bildauswertung angepaßte Belichtung des optischen Sensors der Sensorvorrichtung 6 erfolgen.

Im Beispiel ist die Optik 8 unterteilt in einen oberen und einen unteren Bereich. Eine Linse 13 des oberen Bereiches fokussiert auf den Nahbereich der Windschutzscheibe 1. Dieser Linse 13 zugeordnet ist ausschließlich der Sektor 9.1 der Beschichtung 9. Der Zustand der Scheibe 1 ist bei Analyse des Nahbereichs in der angesprochenen Steuervorrichtung analysierbar. So ist Regen, Schnee oder Beschlag erkennbar und automatische Funktionen (Scheibenwischer, Scheibenheizung und/oder Scheibenbelüftung) können geschaltet werden.

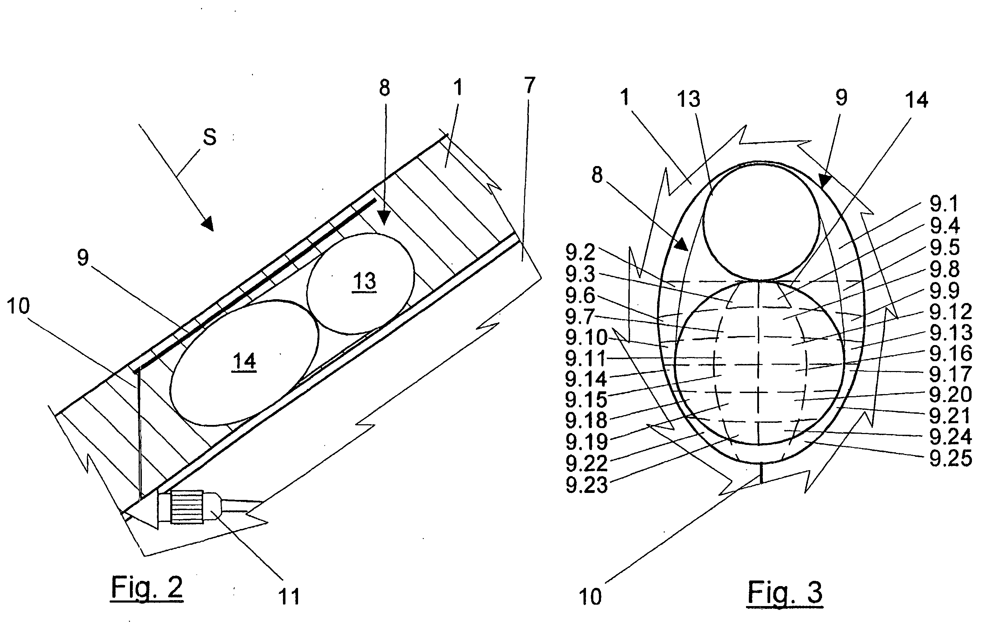

Eine untere Linse 14 dient zur Fokussierung des Fernbereiches. Ihr zugeordnet sind die Sektoren 9.2 bis 9.25 der Schicht 9, wobei die Sektorengrenzen in Fig. 3 nur schematisch dargestellt sind. Die Sektorierung ist auf verschiedene Weise durchführbar, wovon auch die spezielle Ausbildung der Sektorgrenzen abhängig ist.

Die Sektoren 9.2 bis 9.25 der Schicht 9 werden von der Steuervorrichtung in Abhängigkeit von dem Ergebnis der Bildauswertung angesteuert. So können Bereiche des Himmels (besonders Sektoren 9.2 bis 9.9) teilweise ausgeblendet werden und auch zu hoch belichtete Sektoren können verdunkelt werden, wenn beispielsweise ein entgegenkommendes Fahrzeug mit eingeschalteten Scheinwerfern erfaßt wird.

Insgesamt ist mit der beschriebenen Sensorvorrichtung 6 eine optimierte Bilderfassung und -auswertung möglich. Dabei ist ein vergleichsweise geringer baulicher Aufwand und Softwareaufwand vonnöten. Die Integration der Schicht 9 sowie der Optik 8 in die Scheibe 1 und die direkte Anordnung der Sensorvorrichtung 6 an der Scheibe 1 bringen ganz besondere Vorteile mit sich.

Dadurch, daß die optische Sensorvorrichtung 6 mit ihrem Gehäuse 7 direkt an die Windschutzscheibe 1 angesetzt ist, ist eine einfache Möglichkeit der Scheibenbeheizung im Bereich der Optik 8 und der Beschichtung 9 gegeben. Die Abwärme der nicht gezeigten Steuervorrichtung im Gehäuse 7 und der Sensorelektronik selbst wird an die Scheibe 1 geleitet, indem entsprechende Luftkanäle in das Gehäuse 7 integriert sind. Auf eine aufwendige elektrische Scheiben-Zusatzbeheizung ist so verzichtbar, prinzipiell jedoch ebenfalls in die Scheibe zu integrieren und von der Steuervorrichtung direkt ansteuerbar.

## Patentansprüche

1. Optische Sensorvorrichtung (6) für Kraftfahrzeuge mit einem hinter einer Scheibe (1) wie Windschutz-, Heck- oder Scheinwerferscheibe des Kraftfahrzeugs von der Fahrzeugumgebung abgegrenzt angeordneten optischen Sensor zur Ermittlung auf die Fahrzeugumgebung bezogener Messgrößen und mit einer dem Sensor zugeordneten Optik (8), **dadurch gekennzeichnet, dass** die Optik (8) integraler Bestandteil der Scheibe (1) ist und im Durchtrittsbereich der auf die Optik gerichteten Strahlung eine Schicht (9) mit variabler Lichtdurchlässigkeit aufweist.

2. Optische Sensorvorrichtung (6) nach Anspruch 1, **dadurch gekennzeichnet, dass** ein Gehäuse (7) des Sensors direkt an die Scheibe (1), die Optik (8) umschließend angesetzt ist.

3. Optische Sensorvorrichtung (6) nach Anspruch 1 oder 2, **dadurch gekennzeichnet, dass** die Lichtdurchlässigkeit der Schicht (9) in Abhängigkeit von Signalen einer die Sensorsignale auswertenden Steuervorrichtung steuerbar ist.

4. Optische Sensorvorrichtung (6) nach Anspruch 3, **dadurch gekennzeichnet, dass** die Steuerung der Lichtdurchlässigkeit global in zwei Stufen zur Tag/Nachtanpassung erfolgt.

5. Optische Sensorvorrichtung (6) nach Anspruch 3 oder 4, **dadurch gekennzeichnet, dass** die Schicht (9) aus separat und variabel ansteuerbaren Sektoren (9.1 bis 9.25) besteht.

6. Optische Sensorvorrichtung (6) nach einem der Ansprüche 2 bis 5, **dadurch gekennzeichnet, daß** die Scheibe (1) in dem Bereich, in dem sie als Optik (8) ausgebildet ist, beheizbar ist, wobei die Beheizung in Abhängigkeit von Signalen einer die Sensorsignale auswertenden Steuervorrichtung erfolgt.

7. Optische Sensorvorrichtung (6) nach einem der Ansprüche 2 bis 5, **dadurch gekennzeichnet, daß** die Scheibe (1) in dem Bereich, in dem sie als Optik (8) ausgebildet ist, beheizbar ist, wobei zur Beheizung Verlustwärme der Sensorelektronik an die Optik (8) geleitet wird.

8. Optische Sensorvorrichtung (6) nach Anspruch 1 oder 2, **dadurch gekennzeichnet, daß** die Optik (8) waagerecht unterteilt ist in zwei Bereiche (13, 14) verschiedener Brennweite, wobei ein oberer Bereich (13) zur Sensierung von im Nahfeld und ein unterer Bereich (14) zur Sensierung von im Fernfeld reflektierten Strahlen fokussiert.

## Claims

1. Optical sensor device (6) for motor vehicles with an optical sensor arranged behind a pane of glass (1) such as windscreen, rear window or headlamp glass of the motor vehicle, with demarcation from the vehicle environment, for determining measurable variables related to the vehicle environment, and with a lens (8) associated with the sensor, **characterised in that** the lens (8) is an integral part of the pane (1) and, in the region of passage of the radiation directed on to the lens, has a layer (9) with variable light transmission.

2. Optical sensor device (6) according to claim 1, **characterised in that** a housing (7) of the sensor is directly attached to the pane (1), surrounding the lens (8).

3. Optical sensor device (6) according to claim 1 or 2, **characterised in that** the light transmission of the layer (9) is controllable as a function of signals of a control device which evaluates the sensor signals.

4. Optical sensor device (6) according to claim 3, **characterised in that** control of the light transmission is effected globally in two stages for day/night adaptation.

5. Optical sensor device (6) according to claim 3 or 4, **characterised in that** the layer (9) consists of separately and variably controllable sectors (9.1 to 9.25).

6. Optical sensor device (6) according to any of claims 2 to 5, **characterised in that** the pane (1) is heatable in the region in which it is constructed as a lens (8), wherein heating is effected as a function of signals of a control device which evaluates the sensor signals.

7. Optical sensor device (6) according to any of claims 2 to 5, **characterised in that** the pane (1) is heatable in the region in which it is constructed as a lens (8), wherein dissipated heat of the electronic sensor device is conducted to the lens (8) for heating.

8. Optical sensor device (6) according to claim 1 or 2, **characterised in that** the lens (8) is horizontally divided into two regions (13, 14) of variable focal length, wherein an upper region (13) focuses for sensing beams reflected at short range and a lower region (14) focuses for sensing beams reflected at long range.

## Revendications

1. Dispositif de détection optique (6) pour véhicules automobiles, avec un capteur optique, disposé derrière une vitre (1) telle qu'un pare-brise, une lunette arrière ou une vitre de phare du véhicule, séparément de l'environnement du véhicule, pour la réalisation de mesures liées à l'environnement du véhicule, et avec une optique (8) associée au capteur, **caractérisé en ce que** l'optique (8) est un composant intégral de la vitre (1) et présente, dans la zone de passage du rayonnement dirigé vers l'optique, une couche (9) à translucidité variable.

2. Dispositif de détection optique (6) selon la revendication 1, **caractérisé en ce qu'**un boîtier (7) du capteur est fixé directement sur la vitre (1) en entourant l'optique (8).

3. Dispositif de détection optique (6) selon la revendication 1 ou 2, **caractérisé en ce que** la translucidité de la couche (9) est réglable en fonction de signaux provenant d'un organe de réglage exploitant les signaux détectés.

4. Dispositif de détection optique (6) selon la revendication 3, **caractérisé en ce que** le réglage de la translucidité s'effectue globalement en deux étapes pour une adaptation au jour/à la nuit.

5. Dispositif de détection optique (6) selon la revendication 3 ou 4, **caractérisé en ce que** la couche (9) est constituée de secteurs (9.1 à 9.25) séparés et excitables de façon variable.

6. Dispositif de détection optique (6) selon l'une des revendications 2 à 5, **caractérisé en ce que** la vitre (1) est apte à être chauffée dans la zone où elle constitue l'optique (8), le chauffage s'effectuant en fonction de signaux provenant d'un organe de réglage exploitant les signaux détectés.

7. Dispositif de détection optique (6) selon l'une des revendications 2 à 5, **caractérisé en ce que** la vitre (1) est apte à être chauffée dans la zone où elle constitue l'optique (8), la chaleur dissipée par l'électronique du capteur étant amenée à l'optique (8) pour le chauffage.

8. Dispositif de détection optique (6) selon la revendication 1 ou 2, **caractérisé en ce que** l'optique (8) est divisée horizontalement en deux domaines (13, 14) de distances focales différentes, un domaine supérieur (13) réalisant une focalisation pour la détection des rayons réfléchis dans le champ proche et un domaine inférieur (14) réalisant une focalisation pour la détection de rayons réfléchis dans le champ éloigné.
